Europäisches Patentamt

European Patent Office

Office européen des brevets

(11) Publication number : **0 478 275 A2**

# EUROPEAN PATENT APPLICATION

(21) Application number : 91308689.8

(51) Int. Cl.⁵ : **G11B 7/125**

(22) Date of filing : 24.09.91

(30) Priority : **27.09.90 JP 255468/90**

(43) Date of publication of application :
**01.04.92 Bulletin 92/14**

(84) Designated Contracting States :
**DE FR GB**

(71) Applicant : **International Business Machines Corporation**
**Old Orchard Road**
**Armonk, N.Y. 10504 (US)**

(72) Inventor : **Hokozono, Kazuo**
**Shounanlife B-102, 1297-3 Endoh**
**Fujisawa-shi, Kanagawa-ken (JP)**
Inventor : **Shinohara, Tatsuoki**
**Guranbanmatsugaoka 104, 3-15-5**
**Matsugaoka**
**Kugenuma, Fujisawa-shi, Kanagawa-ken (JP)**
Inventor : **Tokizono, Akira**
**Gureisushounadaidaini 301, 1136-1 Engyo**
**Fujisawa-shi, Kanagawa-ken (JP)**
Inventor : **Ueno, Hideo**
**Newheimsaragaoka 306 goh, 3-16-7 Fukuda**
**Yamato-shi, Kanagawa-ken (JP)**

(74) Representative : **Blakemore, Frederick Norman**
**IBM United Kingdom Limited Intellectual Property Department Hursley Park**
**Winchester Hampshire SO21 2JN (GB)**

(54) **A method of and apparatus for controlling laser power in an optical disk drive.**

(57) Optical disk drive apparatus which is operable in a reading mode and in a writing mode comprises a laser driver (26) for varying the power of a laser beam. Control means (16,18,20,22,24,44,40,42) is coupled to the laser driver (26) to maintain the power of the laser beam at a constant value when the apparatus is operating in the reading mode, the constant value being determined by a predetermined reference signal, and to vary the power of a laser beam in response to an input data signal when the apparatus is operating in the writing mode. In the writing mode, the control means (16,18,20,22,24,44,40,42) varies the power of the laser beam as a function of the input data signal and the reference signal. Because the power of the laser beam in the writing mode can be referenced to the power of the laser beam in the reading mode, the laser power in each one of a group of similar disk drives can be automatically and consistently optimised even if the efficiency of the laser emitter in each drive is different.

EP 0 478 275 A2

FIG. 1

The present invention relates to a method of and apparatus for controlling laser power in an optical disk drive operable in a reading mode and a writing mode.

In a conventional optical disk drive, optimum reading laser power does not significantly depend on the quality of the optical disks to be read because during a reading operation, the laser beam intensity reflected from or transmitted through the optical disk is detected only and does not cause any change of the composition, shape, or optical or magnetic properties of the optical disk. However, optimum writing laser power significantly depends on the quality of individual optical disks because the laser beam projected onto the optical disk will cause the change of the composition, shape, or optical or magnetic properties quality of the optical disk. In addition, the optimum writing laser power is influenced by ambient temperature and by the life of the laser-emitter.

Conventionally, reading laser power is adjusted to a target value during the manufacture of the optical disk drive. Feedback control then maintains the reading laser power at the target value during the operational lifetime of the optical disk drive. However, the writing laser power must be adjusted each time a different optical disk is loaded into, and regularly during the life of, the optical disk drive.

The writing laser power is adjusted by varying a digital value (DAC value) provided to a digital-to analogue converter (DAC). The DAC is connected to a voltage-to-current converter (V-I converter) which supplies a current to the laser emitter. The DAC value establishes the laser power. The optimum writing laser power is detected by attempting to write a predetermined test pattern while gradually increasing or decreasing the DAC value for each predetermined value in the test pattern reading the written test pattern, finding the DAC value which generates the optimum reading signal, storing that DAC value in a memory, and generating the writing laser power using the stored DAC value.

A conventional method of determining the initial DAC value will now be described. Initially, a predetermined reference voltage is stored in the optical disk drive, the reference voltage is compared with a detected voltage corresponding to the laser power as the DAC value is increased gradually from near zero. When the result of comparison inverts the DAC value is at the initial DAC value. A DAC step value for varying the DAC value is a predetermined constant digital value.

The efficiency of the laser emitter can vary from product to product. Therefore the laser power generated based on the same DAC step value can vary from product to product. The initial DAC value may significantly depend on the efficiency of the laser emitter and the stability of a reference voltage or a source voltage. Consequently, optimum writing power can be difficult to obtain.

In accordance with the present invention, there is provided optical disk drive apparatus operable in a reading mode and in a writing mode, the apparatus comprising: a laser driver for varying the power of a laser beam; control means coupled to the laser driver to maintain the power of the laser beam at a constant value when the apparatus is operating in the reading mode, the constant value being determined by a predetermined reference signal, and to vary the power of a laser beam in response to an input data signal when the apparatus is operating in the writing mode; characterised in that, in the writing mode, the control means varies the power of the laser beam as a function of the input data signal and the reference signal.

The present invention is based on the realisation that the optimum writing laser power can be referenced to the optimum reading laser power. Because the optimum reading laser can be preset during manufacture to high accuracy, the writing laser power in each one of a group of similar disk drives can be automatically and consistently optimised even if the efficiency of the laser emitter in each drive is different.

Viewing the present invention from a second aspect, there is now provided an optical disk drive apparatus operating under a reading mode wherein a laser power is controlled to keep a predetermined value and under a writing mode wherein a laser power is varied in accordance with a digital input value for establishing a laser power; wherein the digital input value which causes a laser power of said predetermined value is obtained and a digital input value for establishing a laser power which causes a desired laser power in the writing mode is determined based on said digital input value which causes the laser power of said predetermined value.

Viewing the present invention from a third aspect, there is now provide an optical disk drive apparatus operating in a constant laser power mode wherein a laser power is controlled to keep a constant value and in a variable laser power mode wherein the laser power is varied in accordance with a digital input value for establishing the laser power; wherein said apparatus has photo detecting means for detecting said laser power and generating a digital detected value, storage means for storing said digital detected value, and control means for storing the digital detected value at the time when the laser power has been detected by said photo detecting means in the constant laser power mode into said storage means, seeking the digital input value for establishing the laser power at the time when the digital detected value of the laser power in variable laser power mode becomes substantially equal to the digital detected value of the laser power in the constant laser power mode stored in said storage means and, determining, based on the digital input value, the digital input value for establishing a laser power which causes a desired laser power in the variable laser power mode.

Viewing the present invention from a fourth aspect, there is now provided an optical disk drive apparatus operating in a reading mode wherein the power of a laser beam projected onto a recording medium is controlled to keep a predetermined value pre-adjusted in a manufacturing process and in a writing mode wherein said laser power is controlled to vary in accordance with a digital input value for establishing the laser power; wherein a test writing operation is performed in order to determine said digital input value for establishing the laser power which causes a proper writing laser power based on the result of writing operations to said recording medium with various laser power; wherein said apparatus has photo detecting means for detecting said laser power and generating a digital detected value, storage means for storing the digital detected value, and control means for storing the digital detected value at the time when the laser power has been detected in the reading mode into said storage means, obtaining a digital input value for establishing the laser power at the time when the digital detected value of a laser power in the writing mode becomes equal to the digital detected value stored in said storage means in the reading mode, and determining, based on the digital input value, the digital input value for establishing the laser power which causes a desired laser power during said test writing operation.

Viewing the present invention from a fifth aspect, there is now provided a laser power adjusting apparatus for controlling a laser power constructed so as to vary in accordance with a digital input value for establishing the laser power; wherein the digital input value for establishing the laser power is obtained at the time when the laser power becomes a predetermined value, and, based on said digital input value, a digital input value for establishing a laser power which causes a desired laser power is determined.

Viewing the present invention from a sixth aspect, there is provided a method of controlling the power of a laser beam in optical disk apparatus operable in a reading mode and in a writing mode, the method comprising: detecting an offset power level from a photodetector when no laser beam is present; generating a constant laser drive signal for generating a laser beam of constant laser power; detecting a constant output from the photodetector, the constant output being a function of the constant laser power; determining an expected output from the photodetector as a function of the detected offset level and the constant output; increasing the laser drive signal from at or near zero; detecting a first value of the laser drive signal that produces the constant output from the photodetector; further increasing the laser drive signal; detecting a second value of the laser drive signal that produces the expected output from the photodetector; and generating a laser drive signal for producing a desired laser power as a function of the first and second values.

In optical disk drive apparatus of the present invention, the reading laser power is initially adjusted with high accuracy using a light power meter. The apparatus of the present invention detects a DAC value which generates a laser power equal to the adjusted reading laser power, and obtains, based on the detected DAC value, the DAC value which produces the optimum laser power such as an initial DAC value, and the a DAC step value.

Preferred embodiments of the present invention will now be described with reference to the accompanying drawings in which:

FIG.1 shows an embodiment of an optical disk drive apparatus of this invention.

FIG.2 is a flowchart showing how to determine DAC values in said embodiment.

FIG.3 is a graph showing the relationship between DAC values and laser power values in said embodiment.

FIG.4 is a graph showing the relationship between DAC values and laser power values in one of embodiments other than said embodiment.

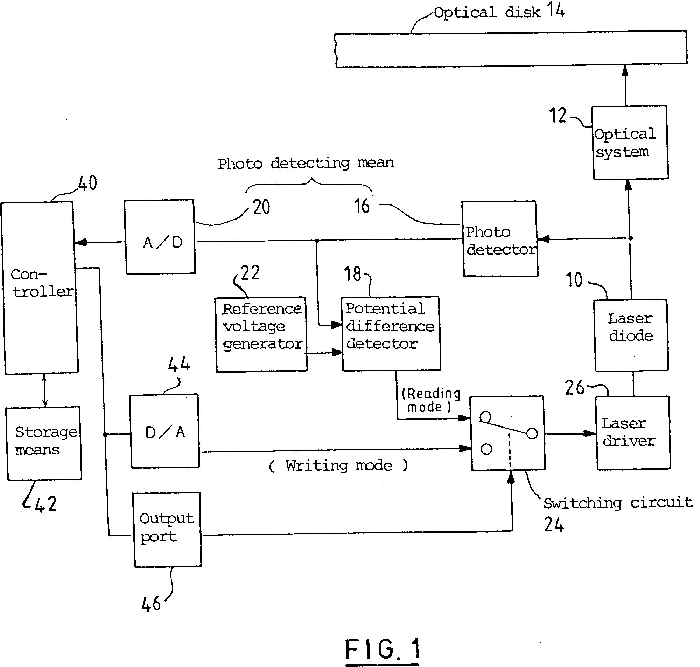

Referring first to Figure 1, a laser beam is emitted from a laser diode 10, which is a laser oscillator. The laser beam is projected, through an optical system 12 onto an optical disk 14, which is a recording medium. The laser power of the laser beam emitted from the laser diode 10 is detected by a photo detector 16 and a detected analogue value is connected to a potential difference detector 18 and an analogue-to-digital converter 20 in parallel.

The potential difference detector 18 compares a reference voltage generated by a reference voltage generator 22 with the detected analogue value and outputs a voltage in accordance with the result of comparison, through a switching circuit 24, to a laser driver 26. In reading mode, the laser power is controlled so that the voltage detected by the photo detector 16 always becomes equal to the reference voltage generated by the reference voltage generator 22. This reference voltage is pre-adjusted during the manufacture of the optical disk drive. For this pre-adjustment, during manufacture the laser power of the laser diode 10 through the optical system 12 is measured by a light power meter. During this measurement, the reference voltage generated by the reference voltage generator 22 is adjusted so that an optimum reading laser power is detected by the power meter. The value of the laser power thus pre-adjusted in the reading mode configuration has very high reliability. This pre-adjusted laser power value will be hereinafter denoted by Pr.

The driver 26, which can be divided into a voltage-to-current converter part and a variable current source part, provides a driving current to the laser diode 10 according to the result of the comparison by the detector 18. The driver 26, the laser diode 10, the photo detector 16, the potential difference detector 18, and the reference voltage generator 22 form a negative feedback loop in which an output voltage generated by the reference voltage generator 22 is used as a target control value. The laser power is thus maintained during operation to the preadjusted laser power value Pr[W] the negative feedback loop.

The analogue detected value from the photo detector 16 is converted to a digital detected value by the analogue-to-digital converter 20. The photo detector 16 and the analogue-to-digital converter 20 constitute a photo detecting means 30 which detects the laser power and outputs a digital detected value.

The digital detected value is stored, through a controller 40, in a storage means 42. In preferred embodiments of the present invention, the controller 40 comprises a microprocessor configured by software. The controller sends the digital detected value to the storage means 42. The controller (40) also sends a digital value (DAC value) for establishing the laser power to a digital-to-analogue converter 44. The digital-to-analogue converter 44 generates a laser power control signal (analogue signal) in accordance with the digital value for establishing the laser power and then generates the laser power control signal, through the switching circuit 24, to the driver 26. In the writing mode, the laser power is adjusted in accordance with the digital value for establishing the laser power. The reading mode operation and the writing mode operation are selected by the switching circuit 24 which is controlled by a switching control signal generated by the controller and provided through an output port 46.

What follows is a description of a test write operation of this embodiment of the present invention hereinbefore a described.

Initially, with the laser diode 10 turned off, a digital value generated by the photo detecting means 30 is stored in the storage means 42. The digital detected value indicates the offset voltage of the photo detector 16 and is represented by Doff.

Then, the switching circuit 24 selects the reading mode, and the reading laser power is controlled to maintain the predetermined value Pr(mW) based on the reference voltage generator 22 under negative feedback control. The laser power value, Pr[mW] is typically 1.5mW.

The switching circuit 24 remains switched to the reading mode to detect and store the digital detected value corresponding to the reading power Pr[mW] in the storage means 42. The digital detected value will be hereinafter represented by Dr.

The laser power at the start of the test write operation is represented by Pw[mW] and the corresponding digital detected value is represented by Dw. Pw is 9.5mW. The following expression applies:

$$Dw = ( Dr - Doff ) \times \frac{Pw}{Pr} + Doff \qquad \text{(Expression 1)}$$

With the switching circuit 24 switched to select the writing mode, the digital-to-analogue converter 44 is provided with a DAC value which is smaller than Dr. The DAC value is gradually increased the digital detected value from the photo detecting means 30 is simultaneously monitored. When the digital detected value becomes substantially equal to Dr, the corresponding DAC value is stored in the storage means 42. This DAC value is represented by Ir. Because the laser power Pr[mW] is adjusted by a photo power meter during a manufacturing process, the DAC value Ir thus obtained generates a laser power Pr[mW] with very high reliability with which apparatus of the present invention controls the laser power.

The DAC value is increased further until the digital detected value from the photo detecting means 30 becomes Dw. The corresponding DAC value is stored in the storage means 42. This DAC value will hereinafter be represented by Iw. To generate the laser power, the laser oscillator operates within the linear part of its P-I characteristic curve. Accordingly, if the laser power per bit of the DAC value is P[mW/bit], then

$$P = \frac{Pw - Pr}{Iw - Ir} \qquad \text{(Expression 2)}$$

From the above expression 2, an increment or a decrement (a DAC step value) of the DAC value corresponding to an increment or a decrement of a laser power for the test write operation can be obtained. If an initial laser power is, for example, 9.5mW as shown above, and a decrement (increment) of a laser power is, for example, 0.5mW at the start of the trial writing, the test write operation is made based on laser powers at points of 9.5mW, 9.0mW, 8.5mW, 8.0mW ... . The DAC values which generate these laser powers can thus be obtained with high precision.

Furthermore, once the DAC value Iw by which the laser power Pw[mV] is to be generated is obtained, the DAC value Io by which a desired laser power Po [mW] other than the laser power Pw is to be generated can be obtained by the following expression.

$$Io = \frac{Iw - Ir}{Pw - Pr} \times Po + \frac{PwIr - PrIw}{Pw - Pr} \qquad \text{(Expression 3)}$$

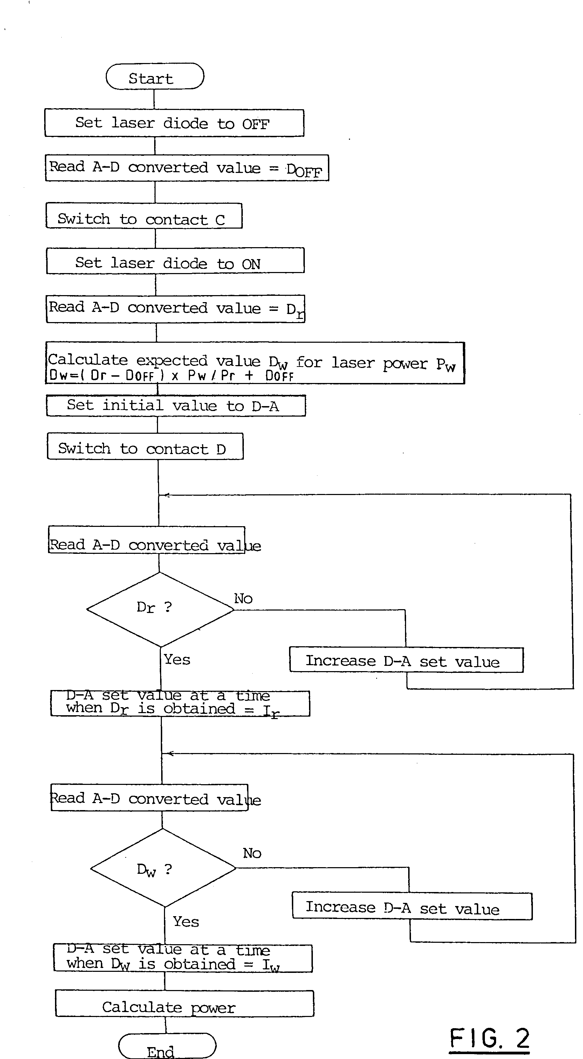

A method of initialising optical disk drive apparatus of the present invention will now be described with reference to Figure 2. In STEP 1, the laser diode is turned OFF. In STEP 2, Doff is read from the analogue to digital convertor (ADC). In STEP 3, the switching circuit is set to select the reading mode. In STEP 4, the laser diode is turned ON. In STEP 5, Dr is read from the analogue to digital convertor. In STEP 6, the expected value of Dw is calculated from expression 1. In STEP 7, the DAC is set to its initial value. In STEP 8, the switching circuit is set to select the writing mode. In STEP 9, the ADC output is read. If the ADC output equals Dr, then STEP 10 follows, in which case the corresponding DAC value is recorded as Ir. Otherwise, STEP 11 follows, in which case the DAC value is incremented and STEP 9 is repeated. In STEP 12, the ADC output is read again. If the ADC output equals Dw, then STEP 13 follows, in which case the corresponding DAC value is recorded as Iw. Otherwise, STEP 14 follows, in which case the DAC value is incremented and STEP 12 is repeated. The optimum laser power can then be generated as indicated by STEP 14.

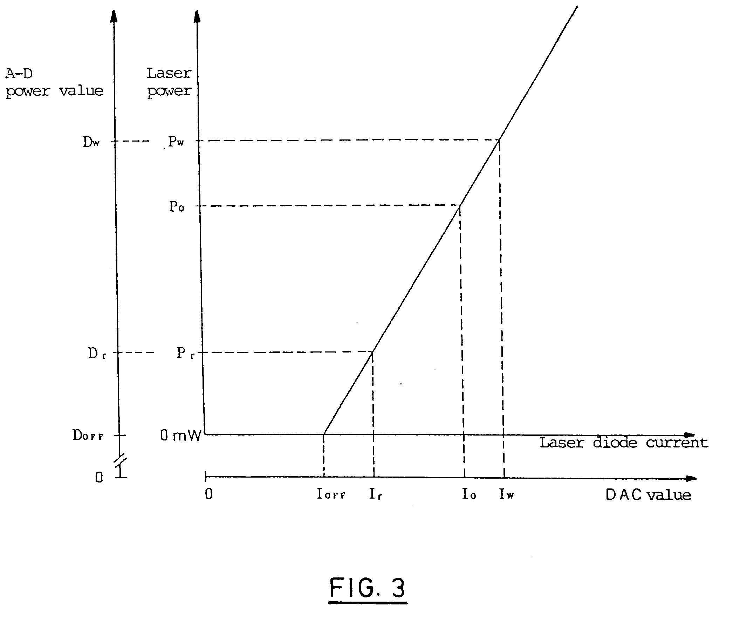

FIG.3 shows the relationship between DAC values and laser power values in the preferred embodiment of the present invention hereinbefore described.

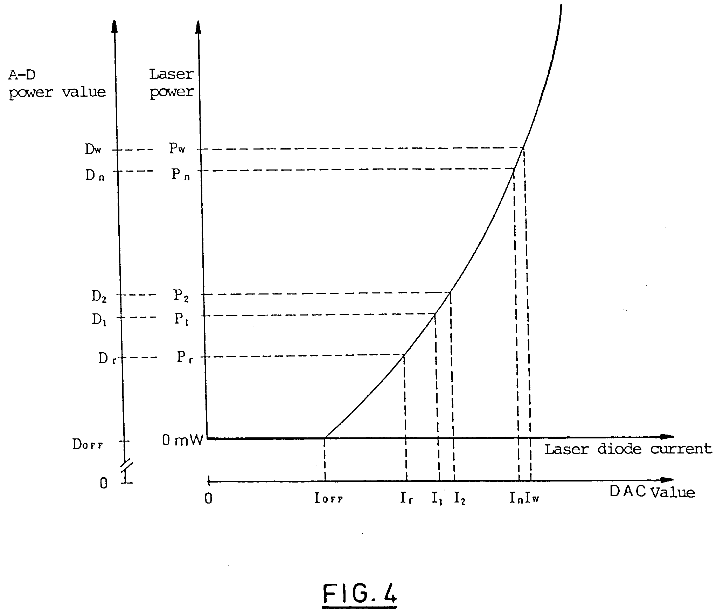

The P-I characteristic shown in Fig. 3 is linear. However, it will be appreciated that if the P-I characteristic of the laser oscillator, , is not linear as shown in FIG.4, the expression 1 shown above may be applied to each of the desired laser power values. For example, if the values of desired laser power are P1, P2, .., Pn, the following expressions can be used.

$$D1 = ( Dr - Doff ) \times \frac{P1}{Pr} + Doff$$

$$D2 = ( Dr - Doff ) \times \frac{P2}{Pr} + Doff$$

.

.

.

$$Dn = ( Dr - Doff ) \times \frac{Pn}{Pr} + Doff$$

Now, as in the embodiment hereinbefore described, DAC values are gradually increased to obtain the DAC values I1, I2, .., In which cause digital detected values equal to DI, D2, .., Dn, respectively.

It will now be appreciated that, according to the present invention, even if the efficiency of a laser oscillator varies from product to product, the laser power can he set to an optimum value.

## Claims

1. Optical disk drive apparatus operable in a reading mode and in a writing mode, the apparatus comprising:
   a laser driver (26) for varying the power of a laser beam;
   control means (16,18,20,22,24,44,40,42) coupled to the laser driver (26) to maintain the power of the laser beam at a constant value when the apparatus is operating in the reading mode, the constant value being determined by a predetermined reference signal, and to vary the power of the laser beam in response to an input data signal when the apparatus is operating in the writing mode;
   characterised in that, in the writing mode, the control means (16,18,20,22,24,44,40,42) varies the power of the laser beam as a function of the input data signal and the reference signal.

2. Optical disk drive apparatus as claimed in claim 1 wherein the control means (16,18,20,22,24,44,40,42) comprises:

a photodetection means (16,20) for generating a digital detected value as a function of the power of the laser beam;

a memory (42) for storing the digital detected value; and

processing means (18,22,24,44,40) for storing the digital detected value corresponding to the laser power generated in the reading mode in the memory (42), detecting a digital input value for generating a laser power in the writing mode corresponding to a digital detected value substantially equal to the value stored in the memory (42) and for varying the power of the laser beam in the writing mode as a function of a digital input signal and the digital input value.

3. Optical disk drive apparatus as claimed in claim 2 wherein the processing means (18,22,24,44,40) comprises a comparator (18) having inputs connected to the photodetection means (16,20) and to a reference signal generator (22) and an output selectively connectable to the laser driver (26), the comparator being connected to the laser driver (26) when the apparatus is operating in the reading mode to maintain the power of the laser beam at the constant value.

4. Optical disk drive apparatus as claimed in claim 3 wherein the photodetection means (16,20) comprises a photodetector (16) responsive to the output of a laser source (10), and an analog to digital convertor (20) connected to the photodetector (16) for generating the digital detected value.

5. Optical drive apparatus as claimed in claim 4 wherein the processing means (18,22,24,44,40) comprises a controller (40) connected to the analogue to digital convertor (20) and the memory (42), and a digital to analogue convertor (44) having an input connected to the controller (40) and an output selectively connectable to the laser driver (26), the digital to analogue convertor (44) being connected to the laser driver (26) when the apparatus in operating in the writing mode to vary the power of the laser beam as a function of the digital input signal.

6. An optical disk drive apparatus operating under a reading mode wherein a laser power is controlled to keep a predetermined value and under a writing mode wherein a laser power is varied in accordance with a digital input value for establishing a laser power; wherein the digital input value which causes a laser power of said predetermined value is obtained and a digital input value for establishing a laser power which causes a desired laser power in the writing mode is determined based on said digital input value which causes the laser power of said predetermined value.

7. An optical disk drive apparatus operating in a constant laser power mode wherein a laser power is controlled to keep a constant value and in a variable laser power mode wherein the laser power is varied in accordance with a digital input value for establishing the laser power; wherein said apparatus has photo detecting means (16, 20) for detecting said laser power and generating a digital detected value, storage means (40) for storing said digital detected value, and control means (40) for storing the digital detected value at the time when the laser power has been detected by said photo detecting means (16, 12) in the constant laser power mode into said storage means (42), seeking the digital input value for establishing the laser power at the time when the digital detected value of the laser power in variable laser power mode becomes substantially equal to the digital detected value of the laser power in the constant laser power mode stored in said storage means (42) and, determining, based on the digital input value, the digital input value for establishing a laser power which causes a desired laser power in the variable laser power mode.

8. An optical disk drive apparatus operating in a reading mode wherein the power of a laser beam projected onto a recording medium is controlled to keep a predetermined value pre-adjusted in a manufacturing process and in a writing mode wherein said laser power is controlled to vary in accordance with a digital input value for establishing the laser power; wherein a test writing operation is performed in order to determine said digital input value for establishing the laser power which causes a proper writing laser power based on the result of writing operations to said recording medium with various laser power; wherein said apparatus has photo detecting means (16, 20) for detecting said laser power and generating a digital detected value, storage means (42) for storing the digital detected value, and control means (40) for storing the digital detected value at the time when the laser power has been detected in the reading mode into said storage means (42), obtaining a digital input value for establishing the laser power at the time when the digital detected value of a laser power in the writing mode becomes equal to the digital detected value stored in said storage means (42) in the reading mode, and determining, based on the digital input value,

EP 0 478 275 A2

the digital input value for establishing the laser power which causes a desired laser power during said test writing operation.

9. A laser power adjusting apparatus for controlling a laser power constructed so as to vary in accordance with a digital input value for establishing the laser power; wherein the digital input value for establishing the laser power is obtained at the time when the laser power becomes a predetermined value, and, based on said digital input value, a digital input value for establishing a laser power which causes a desired laser power is determined.

10. A method of controlling the power of a laser beam in optical disk apparatus operable in a reading mode and in a writing mode, the method comprising:
    detecting an offset power level from a photodetector when no laser beam is present;
    generating a constant laser drive signal for generating a laser beam of constant laser power;
    detecting a constant output from the photodetector, the constant output being a function of the constant laser power;
    determining an expected output from the photodetector as a function of the detected offset level and the constant output;
    increasing the laser drive signal from at or near zero;
    detecting a first value of the laser drive signal that produces the constant output from the photodetector;
    further increasing the laser drive signal;
    detecting a second value of the laser drive signal that produces the expected output from the photodetector; and
    generating a laser drive signal for producing a desired laser power as a function of the first and second values.

8

Optical disk 14

12 ～ Optical system

40

Photo detecting mean

20          16

A / D

Con-
troller

22          18

Reference
voltage
generator

Potential
difference
detector

Photo
detector

10 ～

Laser
diode

44

26 ～

Laser
driver

Storage
means

D / A

(Reading
mode)

42

(Writing mode)

Switching circuit
24

Output
port

46

## FIG. 1

```
                    ( Start )
                        │
        ┌───────────────────────────────┐
        │     Set laser diode to OFF     │
        └───────────────────────────────┘
                        │
        ┌───────────────────────────────┐
        │ Read A-D converted value = DOFF│
        └───────────────────────────────┘
                        │
        ┌───────────────────────────────┐
        │      Switch to contact C       │
        └───────────────────────────────┘
                        │
        ┌───────────────────────────────┐
        │      Set laser diode to ON     │
        └───────────────────────────────┘
                        │
        ┌───────────────────────────────┐
        │  Read A-D converted value = Dr │
        └───────────────────────────────┘
                        │
        ┌────────────────────────────────────────────┐
        │ Calculate expected value Dw for laser power Pw│
        │ Dw=( Dr − DOFF ) x Pw / Pr  +  DOFF          │
        └────────────────────────────────────────────┘
                        │
        ┌───────────────────────────────┐
        │     Set initial value to D-A   │
        └───────────────────────────────┘
                        │
        ┌───────────────────────────────┐
        │      Switch to contact D       │
        └───────────────────────────────┘
                        │
                        ├──────────────────────────────────────┐
                        ▼                                        │
        ┌───────────────────────────────┐                      │
        │    Read A-D converted value    │                      │
        └───────────────────────────────┘                      │
                        │                                        │
                      ◇ Dr ? ──────No──────┐                    │
                        │                   │                    │
                       Yes      ┌───────────────────────────┐   │
                        │       │   Increase D-A set value   │───┘
                        ▼       └───────────────────────────┘
        ┌───────────────────────────────┐
        │ D-A set value at a time        │
        │ when Dr is obtained = Ir       │
        └───────────────────────────────┘
                        │
                        ├──────────────────────────────────────┐
                        ▼                                        │
        ┌───────────────────────────────┐                      │
        │    Read A-D converted value    │                      │
        └───────────────────────────────┘                      │
                        │                                        │
                      ◇ Dw ? ──────No──────┐                    │
                        │                   │                    │
                       Yes      ┌───────────────────────────┐   │
                        │       │   Increase D-A set value   │───┘
                        ▼       └───────────────────────────┘
        ┌───────────────────────────────┐
        │ D-A set value at a time        │
        │ when Dw is obtained = Iw       │
        └───────────────────────────────┘
                        │
        ┌───────────────────────────────┐
        │        Calculate power         │
        └───────────────────────────────┘
                        │
                     ( End )
```

$$D_w = ( D_r - D_{OFF} ) \times P_w / P_r + D_{OFF}$$

FIG. 2

FIG. 3

FIG. 4